# EUROPÄISCHE PATENTANMELDUNG

(11) **EP 2 579 248 A2**
(43) Veröffentlichungstag der Anmeldung: **10.04.2013**
(21) Anmeldenummer: 12187220.4
(22) Anmeldetag: 04.10.2012
(51) Int. Cl.: G10K 11/172, G10K 11/168, E04B 1/86

(54) **Verfahren zur Herstellung einer zwei- oder dreischichtigen schalldämmenden Platte und entsprechende schalldämmende Platte**

(30) Priorität: 07.10.2011 EP 11184397
(71) Anmelder: akustik & innovation gmbh, 4612 Wangen b. Olten (CH)
(72) Erfinder: Mäder, Marco, 4612 Wangen bei Olten (CH)
(74) Vertreter: Liebetanz, Michael

(57) **Zusammenfassung**

Es wird ein Verfahren zur Herstellung einer zwei- oder dreischichtigen schalldämmenden Platte (10) angegeben, die aus einer Trägerplatte (20) und mindestens einer Abdeckplatte oder Beschichtung (30, 35) der Trägerplatte (20) besteht, wobei die Abdeckplatte oder Beschichtung (30, 35) mit der Trägerplatte (20) fest verbunden ist. dabei wird als Trägerplatte (20) eine offenporige (121) Trägerplatte vorgesehen und die schalldämmende Platte (10) ist auf jeder mit einer Abdeckplatte oder Beschichtung (30, 35) versehenen Seite (12, 13) mit dieser Seite gegenüber einer einen Laserstrahl aussendenden Einrichtung angeordnet, wobei die Oberseite (12) dieser Platte (10) mit dem Laserstrahl beaufschlagt wird, der ausgestaltet ist, um Material der diesem zugewandten Abdeckplatte oder Beschichtung (30, 35) in der Tiefe in der Richtung des Laserstrahls in einer Vielzahl von Löchern (31) wegzubrennen. Dabei wird der Laserstrahl die Platte (10) beaufschlagend derart ausgelegt, dass die Taille des Laserstrahls auf eine Ebene parallel zur Unterseite der Abdeckplatte oder Deckschicht (30, 35) fokussiert ist, so dass die Löcher (31) durch die Abdeckplatte oder Deckschicht (30, 35) durchgehend sind und ein unteres Lochende (33) in der Trägerplatte (20) selber hergestellt wird, so dass die Umgebung mit der offenporige Trägerplatte (20) über eine Luftverbindung (121) verbunden ist.

## Beschreibung

### TECHNISCHES GEBIET

Die vorliegende Erfindung betrifft ein Verfahren zur Herstellung einer zwei- oder dreischichtigen schalldämmenden Platte, insbesondere einer Holzplatte, mit den Merkmalen des Oberbegriffs des Anspruchs 1. Die Erfindung betrifft weiter eine solche zwei- oder dreischichtige schalldämmende Platte mit einer zentralen Platte, insbesondere aus Holz, auf der auf beiden Seiten jeweils eine dünne glättende Abdeckschicht aufgesetzt ist, gemäss den Merkmalen des Oberbegriffs des Anspruchs 8.

### STAND DER TECHNIK

Eine dreischichtige schalldämmende Holzplatte mit den Merkmalen des Oberbegriffs des Anspruchs 8 ist aus der WO 2006/056351 bekannt. Die zentrale Trägerplatte besteht aus einem Holzwerkstoff, in dem Löcher eingeschnitten sind, insbesondere durch Bohren. Auf dieser Trägerplatte sind mindestens auf einer Seite, vorteilhafterweise auf beiden Seiten, Abdeckplatten oder Beschichtungen aufgebracht, in welche eine Vielzahl von Löchern gebohrt worden sind, wobei die Löcher in der Platte und der zugehörigen Abdeckplatte zumindest teilweise zueinander ausgerichtet sind. Die Löcher haben Durchmesser von 0,5 bis 1,5 Millimeter und können auch entsprechende Langlöcher sein. Die Trägerplatte kann eine Dicke von 5 bis 50 Millimeter haben, vorzugsweise von 10 bis 20 Millimeter. Dieser Aufbau einer schalldämmenden Platte ist aufwendig, da die mittlere Holzplatte in ihrer gesamten Tiefe bearbeitet wird; dadurch nimmt die mögliche maximale Fläche der schalldämmenden Platte ab. Ferner ist eine Koordination der Verbindung und insbesondere Verklebung der Abdeckplatten oder Beschichtungen der Trägerplatte notwendig, um mindestens teilweise eine Überlappung der Lochmuster zu erreichen. Daher werden vorteilhafterweise beim Stand der Technik in der Trägerplatte Nuten eingelassen, welche die glatte Verbindung der Beschichtung mit der Trägerplatte negativ beeinflusst.

Aus der WO 2006/114090 ist eine dreischichtige schalldämmende Leichtbauplatte mit einem Wabenkern bekannt. Der Wabenkern ist ein Gefüge aus engmaschigen rohen Papierwaben. Die Beplankung besteht aus dünnen Holzwerkstoffplatten, die ein- oder mehrseitige Durchbrechungen aufweist. Die Beplankung kann durch ein Furnier gebildet sein, dass eine Stärke von 0,4 Millimeter und mehr haben kann. Auch Dekorfolien, Papier oder Kunststoffplatten können verwendet werden, wobei jeweils die Durchbrechungen durch Bohrungen, Fräsungen oder Austanzungen gebildet sind. Die sich damit ergebenden Löcher haben einen Durchmesser von 1 bis 20 Millimeter. Diese Akustikplatte absorbiert nur mit einem aufkaschierten Akustikvlies.

Aus der US 2004/069564 A1 sind eine schalldämmende Vorrichtung und ein Verfahren zu deren Herstellung bekannt geworden. Die Vorrichtung umfasst eine äussere Schicht, eine Schallabsorptionsschicht und eine Vielzahl von jeweils perforierten Schichten, welche mit der Schallabsorptionsschicht verbunden sind. Die perforierten Schichten stellen eine strukturelle Steifigkeit bereit und definieren durch die perforierten Stellen mehrere Resonatoren zur Schalldämpfung.

Die WO2007/134626 A1 lehrt ein schallabsorbierendes Plattenelement bestehend aus einem Kern, welcher zu beiden Seiten von einer Schicht abgedeckt ist. Sowohl der Kern als auch die parallel zueinander bereitgestellten Deckschichten weisen schalldurchlässige Ausnehmungen auf. Der Kern weist zudem im Wesentlichen parallel zu den Deckschichten verlaufende Kanäle zu Reinigungszwecken auf. Des Weiteren ist eine schalldämmende Schicht zumindest teilweise auf wenigstens einer der Deckschichten aufgebracht.

Die EP 1 820 915 A1 betrifft ein Verfahren zur Herstellung von akustischen Bauplatten sowie solche Bauplatten. Es wird eine Tragstruktur hergestellt, welche mit einer Deckschicht kaschiert wird, wobei diese Deckschicht nach dem Kaschieren mittels Laserlicht mit Mikroperforationen versehen wird.

Die EP 0 992 636 A2 zeigt eine schallabsorbierende Platte aus einer schallabsorbierenden Tragschicht mit einer fest mit der Tragschicht verbundenen Deckschicht. Die Deckschicht wird mit Mikroperforationen versehen, um den Schall von aussen in die absorbierende Tragschicht zu leiten. Zur Steigerung der Absorptionsleistung sind Vertiefungen in die tragende Schicht eingearbeitet, welche breiter sind als die Perforationen.

### DARSTELLUNG DER ERFINDUNG

Ausgehend von diesem Stand der Technik liegt der Erfindung die Aufgabe zugrunde, ein Verfahren anzugeben, mit dem eine schalldämmende Akustikplatte weniger aufwendig in der Bearbeitung aufzubauen ist. Es ist also ein Ziel der Erfindung, die Herstellung einer solchen Platte rationell und kostengünstig durchzuführen.

Diese Aufgabe wird gemäss der Erfindung mit einem Verfahren mit den Merkmalen des Anspruchs 1 erreicht.

Es wird dabei ein Verfahren zur Herstellung einer zwei- oder dreischichtigen schalldämmenden Platte angegeben, die aus einer Trägerplatte und mindestens einer Abdeckplatte oder Beschichtung der Trägerplatte besteht, wobei die Abdeckplatte oder Beschichtung mit der Trägerplatte fest verbunden ist. Dabei wird als Trägerplatte vorzugsweise eine offenporige Trägerplatte vorgesehen und die schalldämmende Platte ist auf jeder mit einer Abdeckplatte oder Beschichtung versehenen Seite mit dieser Seite gegenüber einer einen Laserstrahl aussendenden Einrichtung angeordnet, wobei die Oberseite dieser Platte mit dem Laserstrahl beaufschlagt wird, der ausgestaltet ist, um Material der diesem zugewandten Abdeckplatte oder Beschichtung in der Tiefe in der Richtung des Laserstrahls in einer Vielzahl von Löchern wegzubrennen. Dabei wird der Laserstrahl die Platte beaufschlagend derart ausgelegt, dass die Taille des Laserstrahls auf eine Ebene parallel zur Unterseite der Abdeckplatte oder Deckschicht fokussiert ist, so dass die Löcher durch die Abdeckplatte oder Deckschicht durchgehend sind und eine untere Lochöffnung, d.h. ein unteres Lochende oder Lochboden in der Trägerplatte selber hergestellt wird, so dass ein in der Trägerplatte endendes Sackloch entsteht, wobei die Umgebung mit der offenporigen Trägerplatte über eine Luftverbindung verbunden ist.

Unter Sackloch ist also ein Loch zu verstehen, welches bis in die Trägerplatte vordringt, diese jedoch nicht vollständig durchdringt. Durch das teilweise Eindringen des Sacklochs in die Trägerplatte wird die sacklochseitige Trägerplattenoberfläche, welche einem Durchgangsloch durch die Abdeckplatte oder Deckschicht zugeordnet ist, vergrössert. Dies bewirkt einen besseren Schalleintrag von aussen in die Trägerplatte und damit eine optimierte Schalldämpfung durch die Platte. Fertigungstechnisch vorteilhaft ist zudem, dass das durchgehende Loch durch Abdeckplatte oder Deckschicht und das Sackloch in der Trägerplatte in einem Schritt durch Laserperforation eingebracht werden können und ein einziges Sackloch bilden. Damit wird in einem einzelnen Bestrahlungsschritt das Durchgangsloch durch die Abdeckplatte oder Deckschicht und das Sackloch in der Trägerplatte und damit das Sacklock in der Akustikplatte hergestellt. Zudem ist durch die feste Befestigung von Abdeckplatte oder Deckschicht und Trägerplatte vor dem Bearbeitungsschritt der Perforation gewährleistet, dass das Durchgangsloch und das zugehörige Sackloch stets optimal aufeinander liegen. Damit wird der Schall dann optimal in der Platte attenuiert. Des Weiteren wird die Stabilität der Trägerplatte durch Sacklöcher weniger geschwächt als durch Durchgangslöcher. Es müssen dann auch keine speziellen Vorkehrungen getroffen werden, um den Bohrvorgang hinter der Trägerplatte aufzufangen, da die Bohrung bzw. die Perforation sicher in der Trägerplatte endet. Zudem besteht erhöhte Fehlertoleranz bei der Tiefe des Sacklochs, womit das Einbringen des Lochs einfacher wird.

Besonders bevorzugt ist eine Akustikplatte mit beidseitiger Deckschicht oder Abdeckplatten, welche von beiden Seiten Sacklöcher aufweist. Damit wird dann aufgrund einseitiger Beschallung dieser Akustikplatte der Schall in die beschallungsseitigen Sacklöcher eingetragen, dabei abgeschwächt und weiter in die Tiefe der Akustikplatte durch das Sackloch in die Trägerplatte eingeleitet. Der Schall kann sich dann unter ständiger Abschwächung in den offenen Poren der Trägerplatte durch die Trägerplatte in ein gegenüber des bereits passierten Sacklochs liegendes Sackloch fortpflanzen und wird dann in diesem gegenüberliegenden Sackloch weiter abgeschwächt. Durch die bevorzugte Wahl einer offenporigen Trägerplatte besteht in dieser Art dann also ein Akustikkanal von einem Sackloch über die Trägerplatte in weitere Sacklöcher, wobei insbesondere das dem Sackloch des ursprünglichen Schalleintrags gegenüberliegende Sackloch und allenfalls unmittelbar dazu benachbarte Sacklöcher aufgrund der Distanz und der Schallausbreitungsrichtung relevant ist. Es besteht somit ein Akustikkanal von der einen Seite der Akustikplatte, über die dortigen Sacklöcher und die offenen Poren der Trägerplatte zu den Sacklöchern auf der anderen Seite der Akustikplatte. Konsequenterweise sind auch auf der gleichen Seite der Platte liegende Sacklöcher über die offenen Poren unter einander akustisch verbunden.

Die gegenüberliegenden Sacklöcher müssen sich hierbei nicht direkt, d.h. in Richtung der Flächennormalen der Akustikplatte, gegenüberliegen. Sie können auch seitlich versetzt liegen.

Jede Spanplatte weist aufgrund ihrer Herstellung interne Hohlräume auf. Diese bilden je nach Dicke eine Platte aus, durch die mit Widerstand durchgeblasen werden kann. Dies zeigt die Anwesenheit von durchgehenden Poren an. Solche sogenannten offenporigen Spanplatten sind bevorzugt. Anstelle einer einzigen Platte können auch mehrschichtige Platten Verwendung finden.

Gleichzeitig sollen die schalldämmenden Eigenschaften gegenüber Platten nach dem Stand der Technik verbessert werden. Eine weitere Aufgabe der Erfindung liegt darin, eine mehrschichtige Platte anzugeben, die im Möbelbereich gut einsetzbar ist, weil ihre gelochte Oberfläche gefälliger als bei Mehrschicht-Platten nach dem Stand der Technik ist.

Dieses weitere Ziel der Erfindung wird mit den Merkmalen des Anspruchs 8 erreicht.

Dadurch, dass die Platte gemäss der Erfindung eine Platte ist, die eine offenporige Mittelschicht aufweist, auf die schon bei der Herstellung der Platte die abdeckenden Paneel-Schichten aufbringbar sind, kann der Herstellungsprozess von der Holzbauseite sehr vereinfacht werden. Es ist dann in der Folge ausreichend, diese Platte mindestens auf der einen Seite mit einem Laserstrahl zu beaufschlagen, sodass durch die abdeckende Paneelfläche hindurch Mikroschlitze entstehen, wobei vorteilhafterweise diese Mikroschlitze in der oberen Abdeckplatte nicht nur hindurch stossen, sondern in die obersten Schichten der offenporigen Trägerplatte hineinreichen. Neben Abdeckungen aus Holz sind auch Kunststoffabdeckungen etc. und andere Beschichtungen aus dem Stand der Technik verwendbar. Das Lasern hat den Vorteil einer im wesentlichen unsichtbaren Optik, die zudem schnell herstellbar ist. Die Platte nach der Erfindung hat nach der Laserbearbeitung eine offene Oberfläche von 3 bis 10 Prozent, vorzugsweise bei einem regelmässigen Schlitzabstand.

Eine mehr Poren und interne Hohlräume aufweisende Platte kann als offenporige Platte dadurch erreicht werden, dass eine leichtere Schüttung der Späne bei der Herstellung der inneren Platte vorgesehen wird, so dass die Dichte der Späne geringer wird. Auch werden diese Späne dann weniger verpresst. Wesentliches Merkmal für eine solche offenporige Platte ist das effizient ausgeführte Vorsehen einer grossen Anzahl von Verbindungslöchern von bevorzugt beiden Seiten durch die die Optik gebenden Kaschiermaterialien. Das wird dann bei einem dünnen Deckmaterial als "beschichtete Spanplatte" geführt, während es bei dickeren Deckschichten als "belegte Spanplatte" bezeichnet wird.

Es ist ein grosser Vorteil und ermöglicht es, grössere schalldämmende Akustikplatten herzustellen, dass eine vorgängige Bearbeitung der Rohspanplatte nicht notwendig ist. Es ist überraschend, dass es hier ausreichend ist, die beidseitigen dünnen Abdeckplatten mit einem scannenden Laser zu bearbeiten, um die absorptionstechnische Verbindung des Umgebungsraumes mit der innenliegenden Spanplatte zu erzeugen. Wichtig ist dabei, dass über die mit dem Laser erzeugten Mikroschlitze die geschlossenen äusseren Schichten der Beschichtung oder Abdeckplatte durchstossen werden und die offene Mittelschicht der Spanplatte angeschnitten wird, so dass eine über alle Schichten in sich selbst absorbierende Platte hergestellt werden kann.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: zeigt eine schematische Querschnittsansicht einer dreischichtigen schalldämmenden Akustikplatte gemäss einem Ausführungsbeispiel der Erfindung;
- Fig. 2: eine schematische Draufsicht auf eine Deckschicht der Akustikplatte mit angeschnittener Trägerplatte nach Fig. 1; und
- Fig. 3: eine Draufsicht auf die Deckschicht der Akustikplatte nach Fig. 1 mit einer Anordnung von durchgehenden Schlitzen in dieser Deckschicht.

### BESCHREIBUNG BEVORZUGTER AUSFÜHRUNGSFORMEN

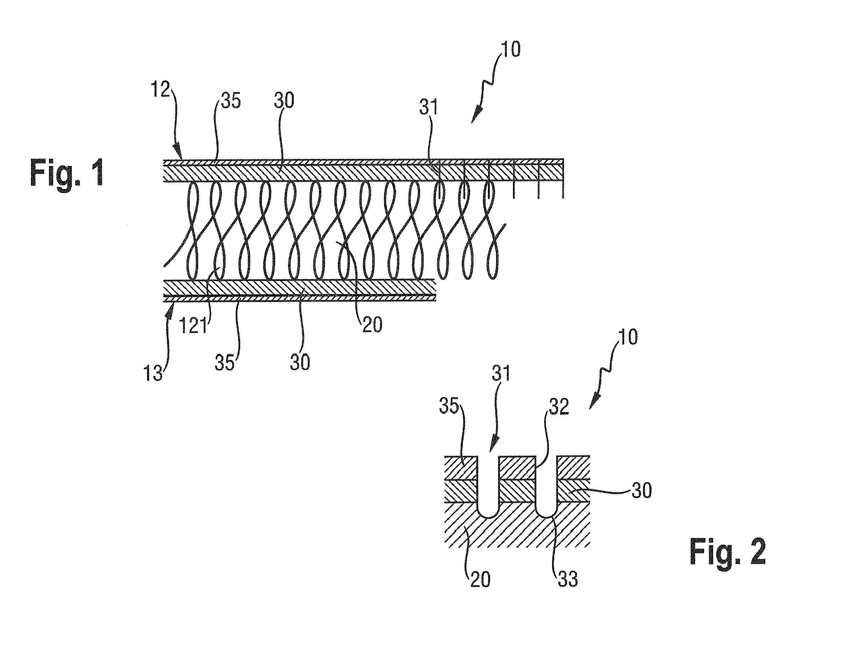

Die Fig. 1 zeigt eine schematische Querschnittsansicht einer dreischichtigen schalldämmenden Akustikplatte 10 gemäss einem Ausführungsbeispiel der Erfindung. Die Mittelschicht oder Trägerplatte 20 der schalldämmenden Holzplatte gemäss dem Ausführungsbeispiel der Erfindung besteht aus einer sogenannten offenporigen Spanplatte. Diese Trägerplatte 20 als Mittelschicht in Gestalt einer offenen Spanplatte ist an sich geeignet, Schall zu absorbieren. Das liegt daran, dass sie ausreichend Lufthohlräume 121 zwischen den sie aufbauenden Spänen aufweist. Eine solche Spanplatte ist beispielsweise unter dem Produktnamen Akupor-H bei BER Deckensysteme, D-33161 Hövelhof, Deutschland, erhältlich. Eine andere Platte der Firma BER Deckensysteme ist die 3-Schichtenakustikplatte, bei der drei Holzplatte miteinander verleimt sind und die obere und die untere Platte gelocht ist.

Eine andere Platte ist unter dem Namen Homalight S der Firma Homanit GmbH & Co KG, 66674 Losheim am See, Deutschland, erhältlich, bei die Span-Holzmittellage mit HDF-Platten abgedeckt ist, insbesondere mit einer Deckschicht von 3 Millimeter Dicke.

Reine Spanplatten 20 sind auf Grund ihrer Spanoptik für technische Anwendungen der Möbelindustrie in dieser Weise nicht verwendbar und werden durch mindestens eine, meistens zwei Schichten 30 und 35 abgedeckt. Mit dem Bezugszeichen 30 ist eine dünne Feinspanschicht bezeichnet, die einen sehr feinen Span aufweist, damit die Oberfläche für die Endbeschichtung 35 glatt wird. Mit anderen Worten, die dünne untere Schicht 30 füllt die gröberen Unebenheiten der offenen Spanplatte 20 auf.

Das Bezugszeichen 35 ist auf eine Deckbeschichtung ausgerichtet, die ein Dekopapier, ein Kunstharzbelag oder Furnier sein kann.

Die Spanplatte 20 kann auch selber mehrschichtig sein. Insofern wird hier der Terminus Spanplatte 20 im Singular auch für mehrschichtige offenporige Platten verwendet, da es nur darauf ankommt, dass in der Platte Poren bestehen, die, eventuell gewunden, von der einen Seite zur anderen Seite der Platte hindurchgehen.

Die Platte 20 kann auch eine Platte aus einem festen porösen Kunststoffmaterial oder aus einem Holz-Kunststoff-Materialverbund sein.

Vorteilhafterweise ist die offenporige Trägerplatte 20 auf beiden Seiten mit den besagten Schichten 30 und 35 versehen, sodass die sich dann ergebende Platte 10 beispielsweise für Türen im Möbelbau eingesetzt werden kann. Mit dem Bezugszeichen 31 sind Sacklöcher, Schlitze oder Mikroschlitze bezeichnet, die nach der Herstellung der beschichteten offenporigen Spanplatte 10 von mindestens einer Seite, vorzugsweise von beiden Seiten durch die beiden Deckschichten 30 und 35 eingebracht werden; diese sind in Fig. 2 auch im Querschnitt gemäss einem Ausführungsbeispiel vergrössert dargestellt.

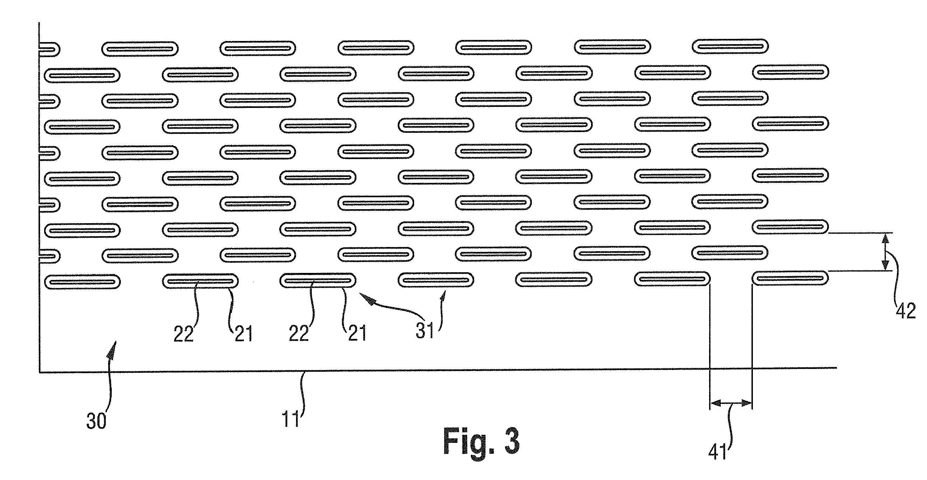

Hierfür wird gemäss einem Verfahren nach einem Ausführungsbeispiel der Erfindung die die Spanplatte 20 abdeckenden Beschichtungen mit einem Dauerstrahllaser in den Reihen der sich dann ergebenden Löcher, Schlitze oder Mikroschlitze abgetastet. Eine entsprechende Verteilung von Schlitzen 31 ist in Fig. 3 zu erkennen, die eine nicht vollständig massstäbliche Draufsicht auf einen Ausschnitt dieser Platte 10 zeigt.

Die abdeckende Platte 30 kann aus einem Polymermaterial, insbesondere aus PET, bestehen. Üblicherweise kann sie auch mit Melaminharzpapier kaschiert sein, was vom Fachmann als beschichtete Spanplatte bezeichnet wird. Die Beschichtung kann eine Dicke von beispielsweise von 0,2 bis 2 Millimeter, insbesondere 1 Millimeter, haben. Es ist auch möglich, die Platte 30 aus einem Metall wie Aluminium oder aus Holz herzustellen. Es sind alle Materialien möglich, in denen Mikroschlitze insbesondere durch Laserlichteinstrahlung erzeugbar sind.

Die Grösse der Platte 30 kann sich im Quadratmeterbereich, beispielsweise mit einer Grösse von 1 mal 2 Meter, bewegen, wobei in der Skizze der Fig. 3 nur zwei Seitenkanten 11 einer Ecke als Hinweis auf die Grösse der Platte 30 eingezeichnet sind. Über die Fläche der Platte 30 sind eine Vielzahl von Mikroschlitzen 31 eingebracht, die regelmässig oder unregelmässig verteilt sein können.

In dem dargestellten ersten Ausführungsbeispiel weisen die Mikroschlitze 31 jeweils eine Länge von 4 Millimeter auf und sind in der Richtung ihrer Längsachse jeweils hintereinander angeordnet. Der seitliche Abstand zwischen zwei Bearbeitungslinien beträgt im dargestellten Ausführungsbeispiel an der Oberseite 12 ein Millimeter. Der Abstand zwischen zwei Schlitzen 31 in Längsrichtung liegt bei 2 Millimeter, üblicherweise zwischen 1,5 und 3 Millimeter.

Bei einer Platte 30 von 1 Meter mal 1 Meter ergeben sich damit ca. 166 Mikroschlitze je Reihe und bei ca. 999 Reihen ungefähr 165'000 Mikroschlitze in der Platte. Vorteilhafterweise wird wie unten ausgeführt ein Gravurlaser verwendet, der über eine Abtasteinrichtung die einzelnen zu erzeugenden Lochreihen hintereinander abfährt und bei einer Scanrate von beispielsweise 1 Meter/Sekunde eine Platte in ungefähr 16 ½ Minuten fertigstellen kann.

In dem anderen in den Zeichnungen nicht dargestellten Ausführungsbeispiel weisen die schmaleren Mikroschlitze 31 der Platte 30 unterschiedliche Längen von 3 und 6 Millimeter auf und sind ebenfalls in der Richtung ihrer Längsachse jeweils hintereinander angeordnet. Der seitliche Abstand 42 zwischen zwei Bearbeitungslinien beträgt im dargestellten Ausführungsbeispiel 1 Millimeter. Der Abstand 41 zwischen zwei Schlitzen 31 in Längsrichtung liegt bei 1 Millimeter. Auch andere Linienanordnungen mit unterschiedlichen Winkeln der einzelnen Mikroschlitze 31 zueinander sind möglich.

Natürlich können auch andere Grössen und Dimensionen verwendet werden, so können in anderen Ausführungsbeispielen die Mikroschlitze 31 eine Länge von 1 Millimeter bis 4 Zentimeter aufweisen und einen Abstand 41 voneinander in Längsrichtung von 1 Millimeter bis 1 Zentimeter aufweisen. Der seitliche Abstand 42 der Reihen voneinander kann von 0,5 bis 10 Millimeter betragen.

Die Mikroschlitze 31 im Material der Platte 30 haben jeweils eine schräge Seitenwand 21 des Schlitzes 31 und ein unteres -Loch 22. Die schrägen Seitenwände 21 sind im Wesentlichen symmetrisch zu einer Mittelachse oder Lochachse im Querschnitt ausgerichtet. Sie können in der Platte 30 oder in der zentralen Platte 10 ausgestaltet sein.

In dem in der Fig. 2 dargestellten Ausführungsbeispiel sind die Seitenwände nicht schräg sondern im Querschnitt halbrund ausgebildet, nach einer Beaufschlagung durch den Laser sind diese gerundeten Nuten entstanden. Sie sind dabei gemäss Fig. 2 vorteilhafterweise in der Tiefe der mittleren Platte 20. Der Viertelkreis der Öffnung in der Tiefe folgt wie bei den oben erwähnten nicht dargestellten schrägen Öffnungsgeraden, im dargestellten Ausführungsbeispiel symmetrisch der Lochachse. Damit ergibt sich ein Öffnungswinkel zwischen den beiden Geraden, der im Querschnitt einen Trichter oder Kegelstumpf oder Zylindermantel mit einem Oval als Basis aufspannt. Dieser ist an der Oberseite 12 der Platte 30 durch die grössere obere Öffnung begrenzt und auf der Unterseite 13 der Platte durch das kleinere durchgehende längliche Loch 22. Die Öffnungsgrösse, also der Winkel zwischen den Geraden ist meist relevant für die jeweiligen Proportionen. Der Winkel kann einen Wert zwischen nahe 5 Grad und 60 Grad, vorzugsweise zwischen 10 und 50 Grad, vorzugsweise um 45 Grad einnehmen. Der im Ausführungsbeispiel der Fig. 2 dargestellte Winkel beträgt 45 Grad.

Die Breite des Schlitzes 31 sollte 0,05 bis 0,5 Millimeter, vorteilhafterweise insbesondere ca. 0,2 bis 0,4 Millimeter, vorteilhaft bei 0,3 Millimeter betragen. Diese Breite des Mikroschlitzes gestattet eine ungehinderte Schallbeaufschlagung der inneren Hohlräume 121 der Platte 10. Eine eigene schallabsorbierende Wirkung der Deckplatten 30 und 35 wird vorteilhafterweise bei schmaleren Mikroschlitzen von ca. 0,1 bis 0,15 Millimeter Breite erreicht.

Der genannte Öffnungswinkel von 5 bis 60 Grad betrifft jeweils den Winkel zwischen der Senkrechten und einer der zugeordneten Öffnungsgeraden, so dass sich bei einem vorteilhaften Winkel von 45 Grad eine Breite des oberen Lochs zu der doppelten Dicke der Platte 30 zuzüglich der Breite des unteren Lochs ergibt.

Dabei ergibt sich ein Aspektverhältnis von Länge der Mikroschlitze 31 zu deren Breite im Durchbruch der unteren Öffnung oder Boden 22, welches einen Wert von 20 bis 50 betragen sollte.

Die Qualität der Seitenwand 21, also die Homogenität dieser Oberfläche ist von geringer Relevanz. Es ist sogar besser, wenn diese Seitenwände 21 der Mikroschlitze 31 uneben sind. Dabei kann die Rauheit der Oberfläche bis zu 0,01 oder bis zu 0,05 Millimeter betragen. Diese Rauheit hat nur einen Einfluss bei einer eigenabsorbierenden Wirkung der Platten 30 und 35.

Insgesamt sollte die gesamtoffene Fläche pro Quadratmeter der Platte 10 zwischen 1 und 10 Prozent liegen, vorteilhafterweise zwischen 3 und 10 Prozent und beispielhaft bei ungefähr 5 bis 10 Prozent, vorteilhafter zwischen 7 und 8 Prozent sein. Dieser Wert entspricht dem oben genannten ersten Ausführungsbeispiel und bezieht sich auf die Fläche der kleineren Mikroschlitzöffnungen 22 auf der Unterseite der Platte oder Beschichtung 30.

Diese Ausgestaltung folgt der dem Fachmann möglichen Einstellung der Laserstärke im Hinblick auf das Material und die Abtastgeschwindigkeit, weil im oberen Bereich der oberen Beschichtung 30 oder der unteren Beschichtung 35 das Material durch den fokussierten Laserstrahl vollständig weggebrannt wird, während die Anordnung der Strahltaille des Laserstrahls im unteren Bereich des oberen Abschnitts dazu führt, dass bei der Scanverweildauer des Laserstrahls das Material der inneren Platte 10 nur insoweit weggebrannt wird, als dass sich gerade die untere kleine Bodenöffnung 22 in der inneren Platte 10 ausbildet, was daher in dieser Platte 10 oder im Übergang zu den Beschichtungen 30 und 35 zu den trichterförmigen Wänden 21 führen kann. In dem Material der Platte 10, kann der Schlitz im Querschnitt auch nicht trichterförmig zulaufen sondern im wesentlichen in der Tiefe abgerundet sein. Es ist möglich, einen breiteren Schlitz auch durch Scanbewegungen des beaufschlagenden Lichtstrahls nicht nur in Längsrichtung der Mikroschlitze 31 sondern auch in Querrichtung zu verbreitern; aber da das zu Lasten der Herstellungsgeschwindigkeit gibt, wird ein einmaliger Scan bevorzugt.

Die Mikroschlitze 31 werden vorteilhafterweise durch eine Beaufschlagung durch Laserstrahlung von der Oberseite 12 der Platte oder Beschichtung 30 und der Unterseite 13 der Platte oder Beschichtung 35 her erzeugt, wobei es wesentlich ist, dass die Strahltaille des Laserstrahls im Bereich der Mitte der Dicke der Beschichtung 30 bis hin zur und in der zentralen Platte 20 liegt. Wesentlich ist, dass der Fachmann die Leistung des Lasers abhängig von der Farbe und dem Absorptionsverhalten des Polymermaterials oder zum Beispiel des metallenen Materials der Platte 10 und der Scangeschwindigkeit, also der Zeit, die der Laserstrahl benötigt, um über einen vorbestimmten Längsweg einen Mikroschlitz 31 zu brennen, so einstellt, dass sich mit einem Scan im Querschnitt des Schlitzes, symmetrisch zur Achse, der Trichter mit den schrägen Seitenwänden 21 erst in der mittleren Platte 20 bildet und die Tiefe des weggebrannten Materials derart ist, dass in der Beschichtung 30 oder 35 ein durchgehender Schlitz gebrannt wird, der sich auf der Unterseite mit Poren des offenporigen Plattenmaterials 20 verbindet.

Um die Platte 20 zeitlich effizient zu bearbeiten und mit der grossen Anzahl von Mikroschlitzen zu versehen, wird ein Gravurlaser verwendet, beispielsweise ist zu Testzwecken für Platten 20 mit einer Grösse von 500 mal 500 Millimeter Grösse ein LS900XP der Firma Gravograph verwendet worden, der mit einer maximalen Leistung von 80 Watt und einer Scangeschwindigkeit von bis zu 4 Meter/Sekunde die notwendigen Leistungsdaten mit sich bringt. Es sind natürlich auch andere Laser und Ablenkungsoptiken einsetzbar.

Die Tiefe der Löcher beträgt durch die Beschichtung 30 beziehungsweise 35 hindurch mit dem Material der mittleren Platte ca. 1 bis 6 Millimeter.

Wesentlich ist, dass die Löcher, Schlitze oder Mikroschlitze durch die beiden für die Schallabsorption nicht beitragenden Deckschichten 30 und 35 hindurch eingebracht werden, das heisst sowohl - gemäss der Fig. 1 gesehen - von der Oberseite 12 wie von der Unterseite 13.

Die Fig. 2 zeigt eine vergrösserte Querschnittsdarstellung von zwei Löchern oder Mikroschlitzen 31, die durch die Feinspandeckschicht 30 und die Paneelschicht 35 bis in die offenporige Spanplatte 20 hineinreichen, insbesondere 1 bis 6 Millimeter weit. Die Mikroschlitze 31 haben vorzugsweise einen Durchmesser zwischen 0,1 und einem Millimeter. Sie sind vorteilhafterweise in einem Abstand von 1 bis 10 Millimeter nebeneinander angeordnet. Sie können auch Löcher mit diesem Durchmesser sein.

Bei dem Einsatz von Mikroschlitzen 31 weist jeder - von oben gesehen - eine Langschlitzform auf, die im Wesentlichen zur Oberfläche 12 bzw. Unterseite 13 der Platte 10 senkrecht ausgerichtete Seitenwände 32 hat. Diese Seitenwände 32 reichen durch die Deckschicht 30 und/oder 35 hindurch und enden in einem in der Querschnittsansicht der Fig. 2 trichterförmigen Ende 33 als Schlitz- oder Lochboden.

Das bedeutet, dass die Beaufschlagung der Oberseite 12 durch einen Laserstrahl dort Material zwischen den Seitenwänden 32 wegnimmt und durch Verdampfung in die Umgebung abgibt. Dieses Loch oder dieser Schlitz geht durch die eine oder durch beide Deckschichten 30 und 35 hindurch und ferner wird durch den Laserstrahl ebenfalls ein Materialanteil im trichterförmigen Ende 33 aus der mittleren Spanplatte 20 entnommen. Mit anderen Worten; jedes Loch, Schlitz oder Mikroschlitz 31 bildet eine direkte akustische Verbindung über seine Tiefe zwischen den Wänden 32 der Deckschichten 30 und 35 mit den Poren der offenporigen mittleren Spanplatte 20. Insofern ist gewährleistet, dass die mittlere Trägerplatte als offenporige Spanplatte 20 wesentlich zur Schallabsorption der Akustikplatte insgesamt beitragen kann und nicht durch die geschlossene Flächen bildenden Deckschichten abgeschirmt wird. Durch die Wahl der offenporigen Spanplatten 20 als mittleres Element und Trägerplatte ist es nun mit dem Verfahren gemäss der Erfindung möglich, die Akustik dämpfenden Eigenschaften der Akustikplatte 10 insgesamt durch das Einbringen einer Vielzahl von Löchern, Schlitzen oder Mikroschlitzen 31 in die Platte 10 zu erreichen.

Die Mittellage der Platte 10 kann aus einem Weichfaser MDF mit vielen Hohlräumen 121 bestehen.

Bei den Reihen von Mikroschlitzen 31 können die Mikroschlitze 31 jeweils unterschiedliche Breite und/oder unterschiedliche Längen und/oder unterschiedliche Tiefen aufweisen.

Die Tiefe des Mikroschlitzes in der Platte kann insbesondere zwischen 0,02 bis 0,5 Millimeter, bevorzugt 0,1 bis 0,4 Millimeter und noch bevorzugter 0,3 Millimeter betragen,

### BEZUGSZEICHENLISTE

- 10: Akustikplatte
- 12: Oberseite
- 13: Unterseite
- 20: Trägerplatte
- 21: Seitenwände
- 22: Boden des Schlitzes

- 30: Feinspanschicht
- 31: Schlitz
- 32: Seitenwand
- 33: Schlitzboden
- 35: Deckbeschichtung
- 121: innere Hohlräume

## Patentansprüche

1. Verfahren zur Herstellung einer zwei- oder dreischichtigen schalldämmenden Platte (10), die aus einer Trägerplatte (20) und mindestens einer Abdeckplatte oder Beschichtung (30, 35) der Trägerplatte (20) besteht, wobei die Abdeckplatte oder Beschichtung (30, 35) mit der Trägerplatte (20) fest verbunden ist, **dadurch gekennzeichnet, dass** als Trägerplatte (20) eine offenporige Trägerplatte vorgesehen wird, dass die schalldämmenden Platte (10) auf jeder mit einer Abdeckplatte oder Beschichtung (30, 35) versehenen Seite (12, 13) mit dieser Seite gegenüber einer einen Laserstrahl aussendenden Einrichtung angeordnet wird, dass die Oberseite (12) dieser Platte (10) mit einem Laserstrahl beaufschlagt wird, der ausgestaltet ist, um Material der diesem zugewandten Abdeckplatte oder Beschichtung (30, 35) in der Tiefe in der Richtung des Laserstrahls in einer Vielzahl von Löchern (31) wegzubrennen, wobei der Laserstrahl die Platte (10) derart beaufschlagt, dass die Taille des Laserstrahls auf eine Ebene parallel zur Unterseite der Abdeckplatte oder Deckschicht (30, 35) derart fokussiert ist, dass die Löcher (31) durch die Abdeckplatte oder Deckschicht (30, 35) durchgehend sind und ein unteres Lochende (33) in der Trägerplatte (20) selber hergestellt wird, so dass die Umgebung mit der offenporige Trägerplatte (20) über eine Luftverbindung verbunden ist.

2. Verfahren nach Anspruch 1, wobei die Löcher (31) durch die Abdeckplatte oder Beschichtung (30, 35) Mikroschlitze mit einem Durchmesser von 0,02 bis 0,5 Millimeter sind.

3. Verfahren nach Anspruch 1 oder 2, wobei der Laserstrahl über die Oberfläche der Oberseite (12) der Platte (10) hinwegstreicht, wobei die Scangeschwindigkeit, die Leistung des Laserstrahls und die Fokussierung des Laserstrahls so eingestellt wird, dass ein trichterförmiger Schlitz (32, 33) mit schrägen Seitenwänden gebrannt wird

4. Verfahren nach Anspruch 3, wobei die Leistung des Laserstrahls gerade so vorbestimmt wird, dass auf der Unterseite der Abdeckplatte oder Beschichtung (30, 35) ein Mikroschlitz (20) mit einer Breite von zwischen 0,02 bis 0,5 Millimeter , bevorzugt 0,1 bis 0,4 Millimeter und noch bevorzugter 0,3 Millimeter, in der offenporigen Trägerplatte (20) entsteht.

5. Verfahren nach einem der Ansprüche 1 bis 4, wobei der Laserstrahl über die Oberfläche der Oberseite (12) der Platte (10) hinwegstreicht, um nacheinander eine Abfolge von in einer Richtung hintereinander in Längsrichtung angeordneten, zueinander beabstandeten Mikroschlitzen (31) wegzubrennen, wobei diese Mikroschlitze (31) in Reihen nebeneinander angeordnet sind.

6. Verfahren nach einem der Ansprüche 1 bis 5, wobei Reihen von Mikroschlitzen (31) mit unterschiedlichen Breiten und/oder mit unterschiedlichen Längen und/oder mit unterschiedlichen Tiefen hergestellt werden.

7. Verfahren nach einem der Ansprüche 1 bis 6, wobei die Abdeckplatten (30, 35) aus Holz, Papier, Furnier, Kunststoff oder Metall sind.

8. Zwei- oder dreischichtige schalldämmende Platte (10), umfassend eine zentrale Trägerplatte (20), vorteilhafterweise bestehend aus einem Holzwerkstoff, wobei auf dieser Trägerplatte (20) auf mindestens einer Seite (12, 13), vorteilhafterweise auf beiden Seiten, jeweils mindestens eine Abdeckplatte oder Beschichtung (30, 35) aufgebracht ist, in welche eine Vielzahl von Löchern (31) gebohrt worden sind, **dadurch gekennzeichnet, dass** die Trägerplatte (20) eine offenporige Pplatte ist.

9. Platte nach Anspruch 8, wobei die Trägerplatte (20) eine Holzplatte, vorzugsweise eine Spanplatte ist.

10. Platte nach Anspruch 8 oder 9, wobei die Löcher (31) durch die Abdeckplatte oder Beschichtung (30, 35) hindurchreichen und in grosser Zahl in Poren der Trägerplatte (20) enden.
